# EUROPEAN PATENT SPECIFICATION

(11) **EP 3 570 671 B1**
(45) Date of publication and mention of the grant of the patent: **29.07.2026**
(21) Application number: 18700497.3
(22) Date of filing: 18.01.2018
(51) Int. Cl.: A01N 63/30, A01N 25/00, A01P 3/00

(54) **POST-HARVEST TREATMENT METHOD USING CLONOSTACHYS ROSEA**
VERARBEITUNGSVERFAHREN NACH DER ERNTE MITHILFE VON CLONOSTACHYS ROSEA
PROCÉDÉ DE TRAITEMENT POST-RÉCOLTE AU MOYEN DE CLONOSTACHYS ROSEA

(30) Priority: 19.01.2017 EP 17152236
(43) Date of publication of application: 27.11.2019
(73) Proprietor: Danstar Ferment AG, 6300 Zug (CH)
(72) Inventor: SANCHEZ, Jean-Marc, 31700 Daux (FR); COR, Olivier, 44640 Saint Jean de Boiseau (FR); DELAUNOIS, Bertrand, 31 200 Toulouse (FR); MOREL, Matthieu, 30650 Rochefort du Gard (FR); ROGALSKA, Selma, 02-991 Wilanow - Warsaw (PL)
(74) Representative: IPAZ
(86) International application number: PCT/EP2018/051153
(87) International publication number: WO 2018/134280

(56) References cited:
- WO-A1-2016/011057
- J. ANDREA BUONASSISI: "Biosecurity Guidelines for Post-harvest Greenhouse Tomatoes: Prevention of Post-harvest and Storage Rot", 27 March 2013 (2013-03-27), XP055349689, Retrieved from the Internet <URL:http://www2.gov.bc.ca/assets/gov/farming-natural-resources-and-industry/agriculture-and-seafood/animal-and-crops/plant-health/biosecurity-tomato.pdf> [retrieved on 20170227]
- ANONYMOUS: "Prestop - AgBio, Inc.", 5 December 2015 (2015-12-05), XP055452351, Retrieved from the Internet <URL:https://web.archive.org/web/20151205055627/http://www.agbio-inc.com/prestop.html> [retrieved on 20180219]

## Description

### TECHNOLOGICAL FIELD

The present invention relates to a post-harvest treatment method for the protection of harvested produce against *Monilinia* spp for the prevention or reduction of post-harvest microbial spoilage caused by *Monilinia* spp of harvested produce and/or for the control or the suppression of biological infestation by *Monilinia* spp in harvested produce, wherein the harvested produce is a citrus fruit or a stone fruit.

### BACKGROUND

Plant pathogens constitute major constraints on crop yield. In addition to losses on growing in-field crops, some plant pathogens also carry over onto harvested commodities which can result in significant spoilage and decay of the produce during storage. Indeed, the majority of post-harvest pathogens infect the crop through wounds that occur during harvest or subsequent handling. Post-harvest losses during storage of crop produce are caused, for example, by water loss, leaf senescence, regrowth and rotting, the latter being caused by fungal and bacterial pathogens. It is estimated that about 25% of the world crop production is lost each year due to post-harvest diseases (as, for example, microbial spoilage), of which spoilage by fungi is by far the most important cause.

It is known that several synthetic chemical compounds can be used to prevent post-harvest damages of harvested produce. However, as known, the use of pesticides causes hazardous effects on humans and the environment. A strong regulation has been imposed, amongst other, on their post-harvest use. Since the use of chemical products has been reduced due to their harmful effect on human health and the environment, the production of fruits free from synthetic chemical residues is a driving cause to find alternative post-harvest treatments to decrease those post-harvest losses.

Biological control of post-harvest fungal pathogens by microbial antagonists such as *Bacillus subtilis, Pseudomonas cepacia, Pseudomonas syringae, Pseudomonas fluorescens, Enterobacter aerogenes, Enterobacter cloacae* and *Debaryomyces hansenii* has been described for a variety of stored vegetables and fruits including apple, apricot, cherry, citrus, grape, nectarine, peach, pear, pepper, plum, potato, strawberries and tomato (Wilson & Wisniewski, 1989). Therefore, the use of antagonistic microorganisms has been suggested as an effective, non-hazardous strategy to control, amongst other, major post-harvest decays of harvested produce.

J. Andrea Buonassisi ("Biosecurity Guidelines for Post-harvest Greenhouse Tomatoes: Prevention of Post-harvest and Storage Rot", 27 March 2013) discloses the use of Prestop, a composition comprising C. *rosea* f. *catenulata* strain J1446, as an active agent in the post-harvest treatment of tomatoes. In the study, Prestop is tested for use against *Botrytis, Penicillium, Alternaria* and *Rhizopus.*

There is thus a need to develop new and alternative biological post-harvest methods that will prevent, retard, inhibit or control the growth of plant pathogens on harvested produce to lengthen the post-harvest shelf-life of the stored harvested produce.

### BRIEF SUMMARY

The present invention relates to the use of the fungus *Clonostachys rosea* f. *catenulata* strain J1446 to extend or increase the post-harvest shelf-life of stored harvested produce. The present invention relates to a post-harvest treatment method which can be applied to harvested agricultural produce to reduce post-harvest spoilage or decay caused by *Monilinia* spp, wherein the harvested produce is a stone fruit or a citrus fruit.

In a first aspect, the present invention concerns a post-harvest treatment method for protecting harvested produce against post-harvest decay caused by plant pathogen, for preventing or reducing post-harvest decay of harvested produce caused by plant pathogen or for controlling plant pathogen on harvested produce comprising applying to the harvested produce an isolated culture, fungal spore or formulation of *Clonostachys rosea* f. *catenulata* strain J1446 in an amount effective to protect the harvested produce against post-harvest decay caused by plant pathogen, to reduce post-harvest decay caused by plant pathogen or to extend post-harvest shelf-life of stored harvested produce relative to an untreated control, wherein the post-harvest decay of harvested produce is caused by *Monilinia* spp, wherein the harvested produce is a stone fruit or a citrus fruit and wherein said culture of C. *rosea* f. *catenulata* strain J1446 is applied to the harvested produce at a concentration of between about 10³ to 10¹² cfu/ml, about 10⁴ to 10¹¹ cfu/ml, about 10⁵ to 10¹⁰ cfu/ml or about 10⁶ to 10⁹ cfu/ml. In an embodiment, the post-harvest method can further comprise, after applying to the harvested produce the isolated culture, fungal spore or formulation of C. *rosea,* storing said harvested produce at ambient conditions of temperature. In yet another embodiment, the post-harvest method can further comprise, after applying to the harvested produce the isolated culture, fungal spore or formulation of C. *rosea* f. *catenulata* strain J1446, storing said harvested produce at a temperature less than 5° C. In still another embodiment, after storing the harvested produce at a temperature less than 5° C, it can be possible of storing said harvested produce at ambient conditions of temperature.. The stone fruit can be peaches, nectarines, plums, apricots or cherries. The citrus fruit can be clementines, grapefruits, lemons, limes, mandarins, oranges or tangerines. In a further embodiment, the culture, fungal spore or formulation of C. *rosea* can be combined with an agriculturally acceptable carrier. In still another embodiment, the culture of C. *rosea* is in a dry formulation and applied to the harvested produce at a concentration of between about 10³ to 10¹² cfu/g, about 10⁴ to 10¹¹ cfu/g, about 10⁵ to 10¹⁰ cfu/g or about 10⁶ to 10⁹ cfu/g.

In a second aspect, the present invention provides the use of an isolated culture, fungal spore or formulation of C. *rosea* f. catenulata strain J1446 in an amount effective for protecting harvested produce against post-harvest decay caused by plant pathogen, for reducing post-harvest decay caused by plant pathogen or for extending the post-harvest shelf-life of stored harvested produce relative to an untreated control, wherein the post-harvest decay of harvested produce is caused by *Monilinia* spp, wherein the harvested produce is a stone fruit or a citrus fruit and wherein said culture of C. *rosea* f. *catenulata* strain J1446 is applied to the harvested produce at a concentration of between about 10³ to 10¹² cfu/ml, about 10⁴ to 10¹¹ cfu/ml, about 10⁵ to 10¹⁰ cfu/ml or about 10⁶ to 10⁹ cfu/ml. The stone fruit can be peaches, nectarines, plums, apricots or cherries. The citrus fruit can be clementines, grapefruits, lemons, limes, mandarins, oranges or tangerines. In a further embodiment, the culture, fungal spore or formulation of C. *rosea* can be combined with an agriculturally acceptable carrier. In still another embodiment, the culture of C. *rosea* is in a dry formulation and applied to the harvested produce at a concentration of between about 10³ to 10¹² cfu/g, about 10⁴ to 10¹¹ cfu/g, about 10⁵ to 10¹⁰ cfu/g or about 10⁶ to 10⁹ cfu/g.

In an embodiment, the present invention provides a method for protecting a stone fruit or a citrus fruit against post-harvest decay caused by *Monilinia* spp. comprising applying to the fruits an isolated culture, fungal spore or formulation of *C*. *rosea f*. *catenulata* strain J1446. In a further embodiment, the present invention provides a method for reducing post-harvest spoilage or decay of a stone fruit or a citrus fruit caused by *Monilinia* spp. comprising applying to the fruits an isolated culture, fungal spore or formulation of *C*. *rosea f*. *catenulata* strain J1446. In still another embodiment, the present invention provides a method for extending post-harvest shelf-life of a stone fruit or a citrus fruit infected by *Monilinia* spp. comprising applying to the fruits an isolated culture, fungal spore or formulation of *C*. *rosea f*. *catenulata* strain J1446.

### BRIEF DESCRIPTION OF THE DRAWINGS

Having thus generally described the nature of the invention, reference will now be made to the accompanying drawings, showing by way of illustration, a preferred embodiment thereof, and in which:
Figure 1 illustrates the percentage of decayed peaches cultivar 'Sandine' during post-harvest storage and compares peaches treated with *C. rosea f*. *catenulata* with controls.
Figure 2 illustrates the percentage of decayed peaches cultivar 'Western Red' during post-harvest storage and compares peaches treated with *C. rosea f*. *catenulata* with controls.
Figure 3 illustrates the distribution of the genera of fungi responsible for the spoilage of peaches cultivar 'Sandine' harvested for the assays and before the application of the post-harvest treatments (water, J1446 and non-treated control).
Figure 4 illustrates the distribution of the genera of fungi responsible for the spoilage of peaches cultivar 'Western Red' harvested for the assays and before the application of the post-harvest treatments (water, J1446 and non-treated control).
Figure 5 illustrates the effect of different post-harvest treatment methods on the cumulative percentage of rotten nectarines during storage at 20-22°C (without refrigeration storage after post-harvest treatments).
Figure 6 illustrates the effect of different post-harvest treatment methods on the cumulative percentage of rotten nectarines during storage at 20-22°C (with refrigeration storage after post-harvest treatments).
Figure 7 illustrates the distribution of the genera of fungi responsible for the spoilage of nectarines harvested for the assays and before the application of the post-harvest treatments (M1 to M7).
Figure 8 illustrates the effect of different post-harvest treatment methods on the cumulative percentage of rotten plums (without refrigeration storage after post-harvest treatments).
Figure 9 illustrates the effect of different post-harvest treatment methods on the cumulative percentage of rotten plums (with refrigeration storage after post-harvest treatments).
Figure 10 illustrates the percentage of inoculated wound sites with positive disease symptoms caused by *P. digitatum.*
Figure 11 illustrates the percentage of inoculated wound sites with positive disease symptoms caused by *P. italicum.*

### DETAILED DESCRIPTION

The present invention provides a post-harvest treatment method for protecting harvested produce against plant pathogens comprising applying to the harvested produce an effective amount of a culture of *Clonostachys rosea* f. *catenulata* strain J1446. C. *rosea* is a widespread, soil-borne fungal saprophyte. This fungus is known as a biological control agent against various soil-borne and foliar plant pathogens. It has been discovered that the fungus C. *rosea* f. *catenulata* strain J1446 has the property of preventing, retarding or inhibiting growth of plant pathogens on harvested produce and may consequently be used for post-harvest treatment of harvested plant. It has been demonstrated that C. *rosea* can be applied to agricultural produce to reduce post-harvest spoilage, decay or rotting caused by *Monilinia* spp. via a competitive inhibition with phytopathogens. The present invention relates also to a use of the fungus C. *rosea* f. *catenulata* strain J1446 to extend or increase the post-harvest shelf-life of stored harvested produce.

An "effective amount", as used herein, is an amount sufficient to effect beneficial or desired results.

In the context of the present invention the biological control agent is the fungus C. *rosea* f. *catenulata* strain J1446. Indeed, many isolates of C. *rosea* are highly efficient antagonists against several plant pathogenic fungi. The biological control agent C. *rosea* is an antagonistic fungal plant pathogen that is widely present in soil and can produce a series of antibacterial metabolites. According to the invention, C. *rosea* is C. *rosea* f. *catenulata strain J1446.* This strain has been deposited on 19 May 1994 according to the Budapest Treaty to the DSM depositary by the accession number DSM 9212. *C. rosea f. catenulata* J1446 is commercially available under the trademark PRESTOP^{®} (Lallemand (Verdera, Finland)).

The fungus *C. rosea f. catenulata strain J1446* of the present invention is formulated as a liquid suspension or in a dry powder according to any suitable methods known in the art. The biologically pure culture, suspension or formulation (comprising, but not limited to, conidia, mycelium fragments and spores) is applied to the harvested produce at a concentration of between about 10³ to 10¹² cfu ("colony forming unit")/ml, about 10⁴ to 10¹¹ cfu/ml, about 10⁵ to 10¹⁰ cfu/ml or about 10⁶ to 10⁹ cfu/ml. *C*. *rosea* is applied to the harvested produce in a liquid suspension at a concentration of about 1x10⁴, about 1x10⁵, about 1x10⁶, about 1x10⁷, about 1x10⁸, about 1x10⁹, about 1x10¹⁰, about 1x10¹¹, about 1x10¹², about 1x10¹³ cfu/ml or greater than 1x10¹³ cfu/ml. *C*. *rosea* can also be applied to the harvested produce in a dry formulation (comprising, but not limited to, conidia, mycelium fragments and spores) at a concentration of between about 10³ to 10¹² cfu/g, about 10⁴ to 10¹¹ cfu/g, about 10⁵ to 10¹⁰ cfu/g or between 10⁶ to 10⁹ cfu/g. *C*. *rosea* can also be applied to the harvested produce in a dry formulation at a concentration of about 1x10⁴, about 1x10⁵, about 1x10⁶, about 1x10⁷, about 1x10⁸, about 1x10⁹, about 1x10¹⁰, about 1x10¹¹, about 1x10¹², about 1x10¹³ cfu/ml or greater than 1x10¹³ cfu/g. The optimal amount can vary depending upon crop species and plant pathogens and can be readily determined by those skilled in the art.

The fungal culture, suspension or formulation according to the present invention can be applied to harvested produce by contacting the harvested produce by any means known to the artisan skilled in the art. The term "contacting" as used herein means causing the harvested produce to come into proximity with an exogenous liquid or solid (such as a powder) form of a composition according to the disclosure. Examples of such methods include, but are not limited to dipping, immersing, spraying, misting, fogging, coating, dusting or soaking application methods. The application forms and methods depend entirely on the intended purposes in order to ensure the finest and uniform distribution of the biological control agent onto the harvested produce. Aqueous application forms can be prepared from emulsion concentrates, pastes or wettable powders by adding water. It is also possible to prepare concentrates composed of the biological control agent, wetter, tackifier, dispersant or emulsifier and, if appropriate, solvent or oil, and such concentrates are suitable for dilution with water. The fungal culture, suspension or formulation according to the present invention is applied to the harvested produce as a single dose exposure or in multiple doses or exposures at different times.

The fungal antagonist of the present invention is effective for stone fruits and citrus fruits, stored at ambient conditions of temperature (±20°C). The fungal antagonist of the present invention can also be used for stone fruits and citrus fruits stored at temperatures less than 5°C. The fungus can theoretically be applied at any time during the harvest, grading, shipping process, or during the early stages of storage. Of course, the harvested stone fruits or citrus fruits are more susceptible to infection any time a wound occurs and a fungal disease agent is present. Therefore, the longer the delay between the wounding and the treatment with the fungal composition, the greater the chance the pathogen will successfully infect the harvested produce.

The fungal culture, suspension or formulation can be applied, after harvesting, onto the surface of the harvested produce in combination with any known agriculturally-acceptable adjuvant, carrier or binder formulation. Agriculturally-acceptable adjuvants, carriers or binders are commercially available and must be safe for human consumption. The microorganisms may also be applied in suspension with liquid culture medium. The compositions may also include conventional additives such as surfactants and wetting agents to enhance the effectiveness of the organisms. As an integrated approach, the harvested produce can also be treated with other antifungal and/or antimicrobial compositions, commonly known to the person skilled in the art, either prior or after treatment of the harvested produce with the post-harvest treatment of the present invention

The post-harvest treatment according to the present invention is important in the control of fungi on stone fruits and citrus fruits. In one particular embodiment, the harvested produce is a stone fruit. In a further embodiment, the stone fruit is a peach, nectarine, plum, apricot or cherry. In some embodiments, the harvested produce is a citrus fruit and can be, for example, a clementine, grapefruit, lemon, lime, mandarin, orange or tangerine.

The post-harvest treatment method of the present invention is suitable for controlling *Monilinia* spp. *(Monilia* spp.). In a further embodiment, the post-harvest treatment method of the present invention is suitable for biologically controlling or reducing post-harvest spoilage or post-harvest rotting caused by *Monilinia* spp. *(Monilia* spp.). In a further embodiment, the post-harvest treatment method of the present invention is suitable for controlling, retarding or reducing post-harvest spoilage or post-harvest rotting caused by *Monilinia* spp., more particularly caused by *M. fructicola* or *M. laxa.* More particularly, the post-harvest treatment method of the present invention can be used for protecting stone fruits against decay caused *by Monilinia* spp. as, for example, *M. fructicola* or *M. laxa.*

The following examples serve to further describe and define the invention, and are not intended to limit the invention in any way.

### EXAMPLES

### EXAMPLE 1: EFFICACY OF C. ROSEA F. CATENULATA AGAINST POST-HARVEST DISEASES ON PEACHES

The objective of this study was to evaluate the effect of C. *rosea* f. *catenulata* for the management of post-harvest diseases on peaches, for preventing post-harvest decay and for reducing post-harvest losses of harvested peaches.

### Fruits:

Peaches ('Sandine' and 'Western Red') were picked at firm ripe stage from a commercial orchard (using Integrated Fruit Production (IFP)) and store at 4°C for 2 days or less.

### Antagonist/biocontrol agent:

PDA (potato dextrose agar) in Petri dishes was inoculated with spores of C. *rosea* f. *catenulata* J1446 by placing a droplet of spore suspension containing about 10⁶ to 10⁷ cfu/ml onto the medium in each dish and spreading the droplet over the agar surface with a cell spreader. The dispersed spores initiated numerous colonies which sporulated heavily at 25° C and the spores were normally collected after 8 days.

### Fruit inoculation:

The peaches were disposed on trays (22 peaches per tray). There were 4 replicates of 44 peaches per treatment and per variety, with one replicate of each treatment per tray. Non-treated fruits (i.e. produced fruits via Integrated Fruit Production) and fruits treated with water were used as negative controls.

For the post-harvest treatments, the fruits were sprayed to runoff (15 ml per tray) on both sides with a C. *rosea f. catenulata* J1446 suspension at a concentration of about 10⁷ cfu/ml. The peaches were air-dried and incubated at 22°C. Percent fruit infection was measured every 48 hours for 30 days.

### Statistical analysis:

Data were statistically analyzed using StatBox Pro. Analysis of variance was performed on arcsin square-root transformed data by the general linear models procedure. Mean separations were performed using the Student Newmann and Keuls test.

### Results and conclusion:

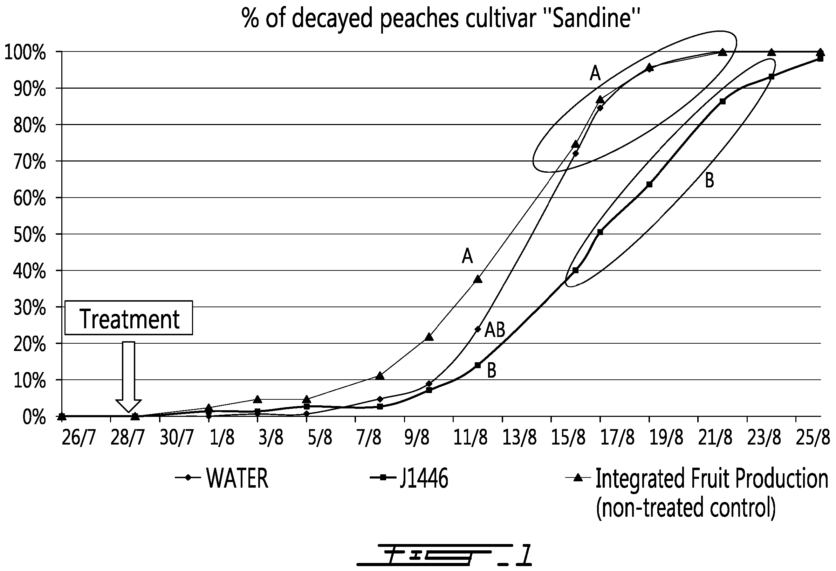

The results, as shown in Figure 1, clearly demonstrated that the percentage of decayed harvested peaches 'Sandine' was significantly reduced when the harvested peaches were inoculated with C. *rosea f. catenulata* J1446 as compared to the controls.

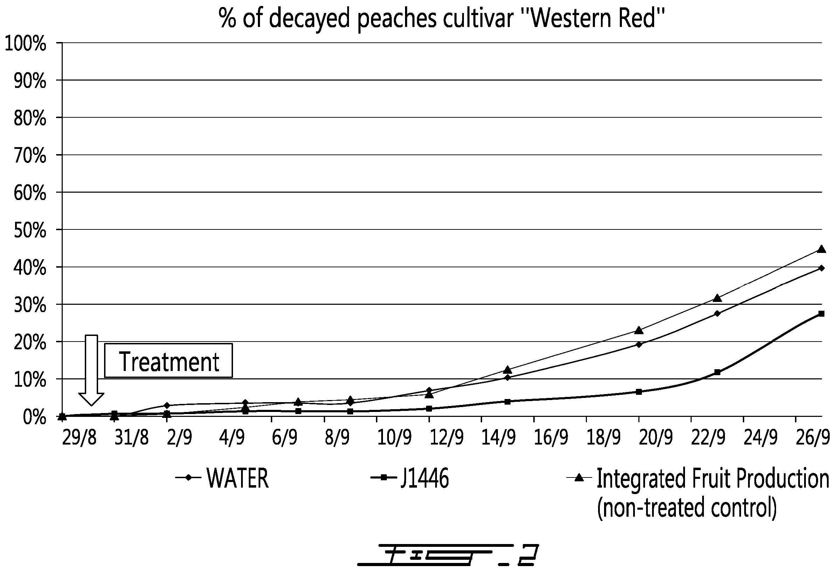

Results shown in Figure 2 represent the decay incidence on harvested peaches cultivar 'Western Red' and indicate that this peach cultivar was less susceptible to post-harvest decay than the 'Sandine' cultivar. Although the post-harvest treatment with C. *rosea f. catenulata* J1446 retarded decay symptoms, the fungus treatment did not significantly reduce decay when compared with the controls.

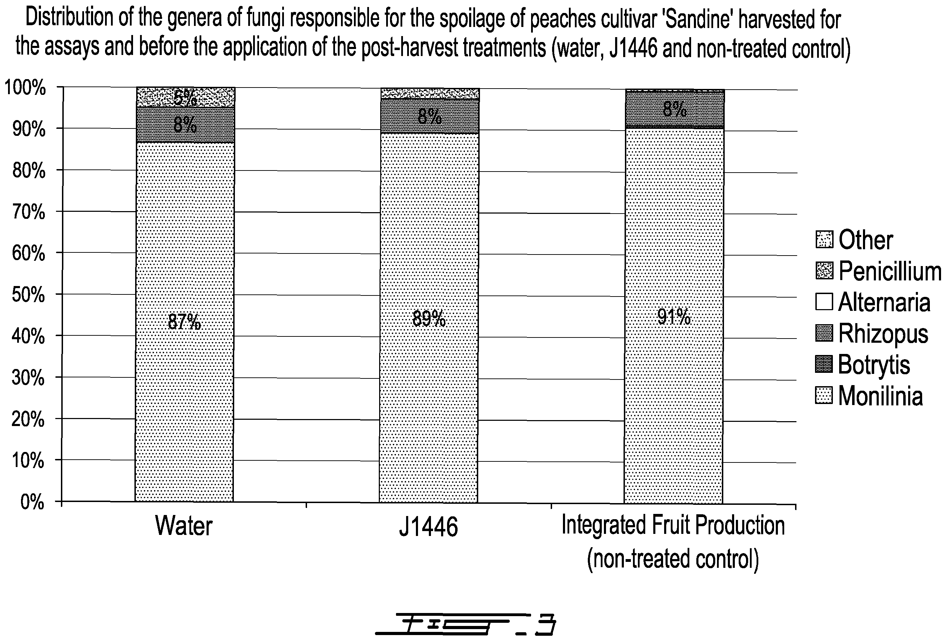

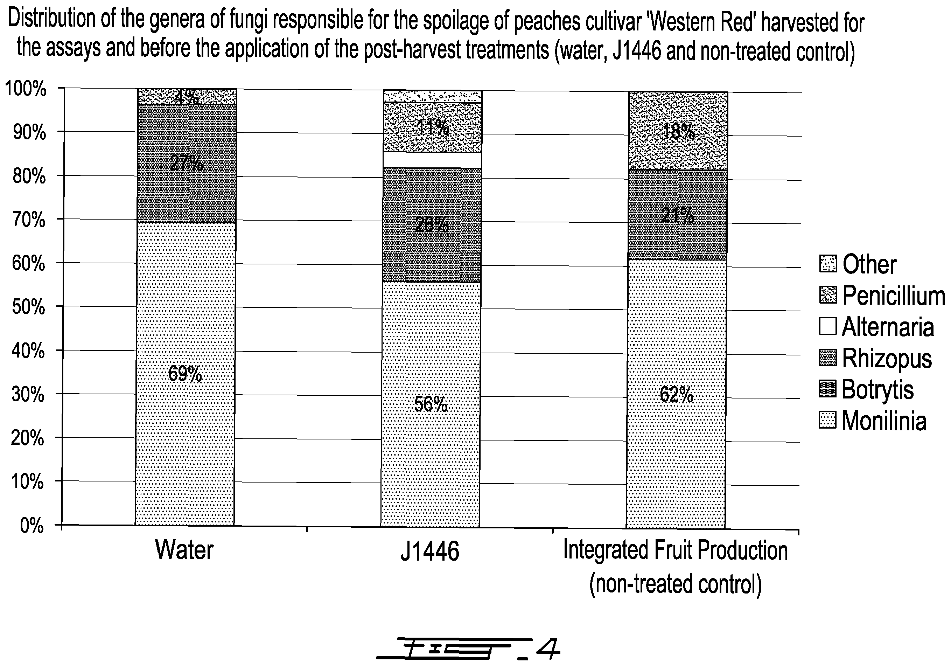

After analysis and as shown in Figures 3 and 4, it was demonstrated that spoilage on the peaches of both cultivars, before the post-harvest treatments, was caused by the following fungi: *Monilinia* spp., *Rhizopus* spp., *Penicllium* spp., *Alternaria* spp. and *Botrytis* spp.. At the moment the post-harvest treatments were performed, *Monilinia* spp. was found to be associated as the predominant fungus with the rotten fruits.

Based on these results, it has been demonstrated that C. *rosea f. catenulata* J1446 can reduce the incidence and rate of development of *Monilinia* spp. infection in peaches.

In summary, as measured by their physical and sensory attributes, the use of C. *rosea* f. *catenulata* J1446 as a post-harvest treatment method preserved the quality of the peaches cultivars 'Sandine' and 'Westernred' during storage. These results demonstrated, amongst other, that C. *rosea* f. *catenulata* J1446 is a useful alternative for controlling pathogenic fungi, protecting harvested produce against storage diseases caused by *Monilinia* spp., maintaining the post-harvest quality of peaches and extending the post-harvest shelf-life of the stored harvested produce.

### EXAMPLE 2: BIOLOGICAL CONTROL OF POST-HARVEST FUNGAL ROTS OF NECTARINES USING C. ROSEA F. CATENULATA

The aim of this study was to investigate the effect of various post-harvest treatment methods (two different formulations of the biocontrol agent, with or without refrigeration storage after the post-harvest treatment) on the post-harvest quality of nectarines during storage conditions.

### Fruits:

Nectarines (Variety: Nectatop; Year of planting: 2011; Distance between plantings and density: 6 x 3 m, i.e. 556 trees/ha) were picked at firm ripe stage, measured, selected (same size, same level of maturity, lack of damage) and boxed up with 260 to 280 fruits per tray. They were stored at 2-4°C for 2 to 3 days.

### Post-harvest treatments:

The nectarines were disposed on trays (60 nectarines per tray). There were four replicates of 60 nectarines per treatment. Non-treated fruits (i.e. produced fruits via Integrated Fruit Production) and fruits treated with water were used as negative controls. The trays were stored in an air-conditioned room at 20-22°C for 15 to 21 days with or without a refrigerated storage at 2-4°C for 5 to 8 days after the post-harvest treatment.

Nine different methods of treatment were tested and compared. They are defined in Table 1.

**Table 1: Description of the tested methods of treatment**

| | Pre-harvest (during major work) | | Post-harvest | | | | |
|---|---|---|---|---|---|---|---|
| Methods of treatment | R-21 at 25D | R-5 at 10D | At harvesting | Post-harvest treatment via spraying | Post-harvest treatment via a nebulizing system (or mist fogging system) | Post-treatment storage | Storage monitoring |
| M1 TNT-Fridge | Kruga | Signum | Fridge 2-4°C (2-3 days) | - | - | Refrigeration at 2-4°C (5 to 8 days) | Air-conditioned room at 20-22°C (15 to 21 days) |
| M2 TNT-Aircon | Kruga | Signum | | - | - | - | |
| M3 Trai-WG Fridge | Kruga | Signum | | Prestop WG^{®} (0.20%) | - | Refrigeration at 2-4°C (5-8 days) | |
| M4 Trai-WG Aircon | Kruga | Signum | | Prestop WG^{®} (0.20%) | - | - | |
| M5 Trai-WP Aircon | Kruga | Signum | | Prestop WP^{®} (2%) | - | - | |
| M6 Water-Fridge | Kruga | Signum | | | Water | Refrigeration at 2-4°C (5-8 days) | |
| M7 Water-Aircon | Kruga | Signum | | | Water | - | |
| M8 Nebu-Fridge-WG | Kruga | Signum | | | Prestop WG^{®} 1.4g/m3 fridge (14g in 2l water) | Refrigeration at 2-4°C (5-8 days) | |
| M9 Nebu-Aircon-WG | Kruga | Signum | | | Prestop WG^{®} 1.4g/m3 fridge (14g in 2l water) | - | |

The types of methods of treatment used in the study are described as follows:
- Pre-harvest treatments in the orchard were performed on the whole plot with a flow rate of 750 I/ha. The products used were: Kruga (3 I/ha) and Signum (0.75 kg/ha). The applications of the pre-harvest treatments were performed on July 7 and 21, 2017 under good conditions. They were deliberately restricted to two interventions in order to promote serious pressure in terms of storage diseases.
- Post-harvest application via hand-spraying for methods of treatment M3, M4 and M5 was performed according to the methodology described below.
- Post-harvest application via the use of a nebulizer (or fogger or mister) for methods of treatment M6 to M9 according was performed according to the methodology described below.

For the post-harvest treatments, two different formulations of Prestop^{®} (Lallemand) were tested. Prestop WP^{®} and Prestop WG^{®} contain C. *rosea* f. *catenulata* J1446. Prestop WG^{®} (1 x 10⁹ cfu/g) is ten times more concentrated that Prestop WP ^{®} (1 x 10⁸ cfu/g).

A stock solution for each treatment was prepared using sterile distilled water with C. *rosea* f. *catenulata* J1446 and amounts of suspension were calculated to be applied at the equivalent of 2 g/l and 20 g/l for Prestop WG^{®} and Prestop WP^{®}, respectively. For methods of treatment M3, M4 and M5, the suspension was applied using a spray bottle pump. Eight sprays were applied onto one face of a tray for a total of 7,5 ml. For methods of treatment M6 to M9, the suspension was applied using a nebulizer (Atomist 1037, Hyprodis). The fruits were air-dried.

Following the inoculation step, the fruits treated with the methods of treatment M1, M3, M6 and M8 were submitted to a refrigerated storage at 2-4°C for 5 to 8 days before the transfer in an air-conditioned room at 20-22°C for 15 to 21 days. The fruits treated with the methods of treatment M2, M4, M5, M7 and M9 were directly stored in an air-conditioned room at 20-22°C for 15 to 21 days without prior refrigerated storage.

Percent fruit infection along with the identification of the pathogens was measured every 48 hours for a minimum of 15 to 21 days.

### Weather conditions:

The climatic data have been routinely acquired by a CIMEL station. They were collected throughout the duration of the trial.

The trial took place in the orchard between 7 July and 7 August 2017, the date on which the second harvest started and the fruits were placed in storage. This period was particularly warm and generally dry.

### Statistical analyses:

Data were statistically analyzed using StatBox Pro. Analysis of variance was performed on arcsin square-root transformed data by the general linear models procedure. Mean separations were performed using the Student Newmann and Keuls test.

### Results and conclusion:

Harvesting was performed five times. The yield from the plot was very high (59.6 T/ha), with a predominant size of A. The fruits destined for post-harvesting treatment and monitoring were picked during the second harvesting.

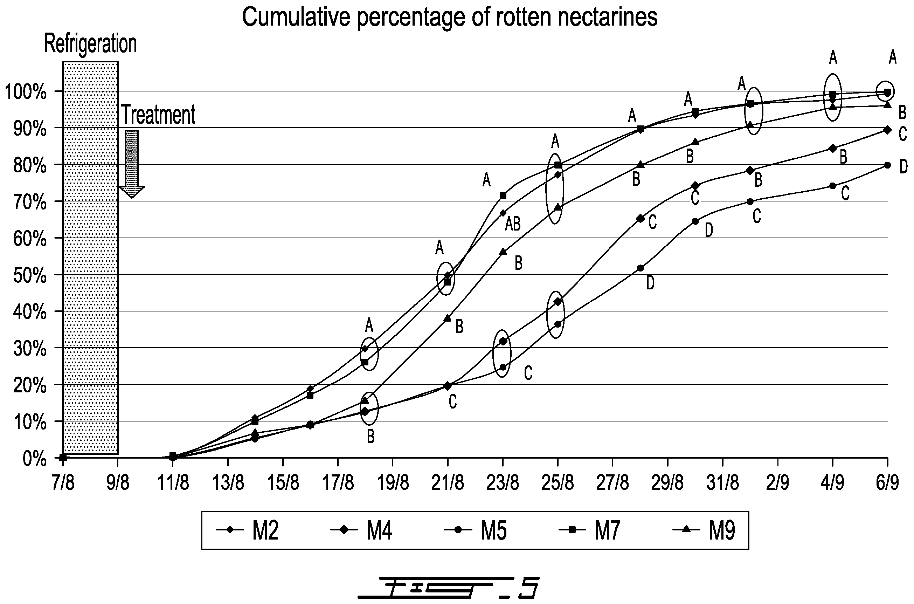

The methods of treatment M2, M4, M5, M7 and M9 were directly stored, after the post-harvest treatment, in an air-conditioned room at 20-22°C for 15 to 21 days. As shown in Figure 5, the appearance of rotten fruits in the control (M2) stored in the air-conditioned room was rapid, namely, 6 days after removal from the refrigerator and after the post-harvest treatment, 20% of the fruits were affected and after 12 days nearly 50% of the fruits were rotten. The pressure was sufficient to validate the trial.

As shown in Figure 5, mist application (M9) or spray treatment (M4 and M5) of C. *rosea* f. *catenulata* J1446 to harvested nectarines stored at 20-22°C significantly suppressed or reduced the incidence and development of rot in the fruits. The spray treatment (M4 and M5) showed a better effect of the biocontrol agent on the reduction of the rot rate compared to the treatment applied via the mist application (M9). It appears that the spray treatment (M4 and M5) ensured an effective and more uniform distribution of the biocontrol agent on the fruits.

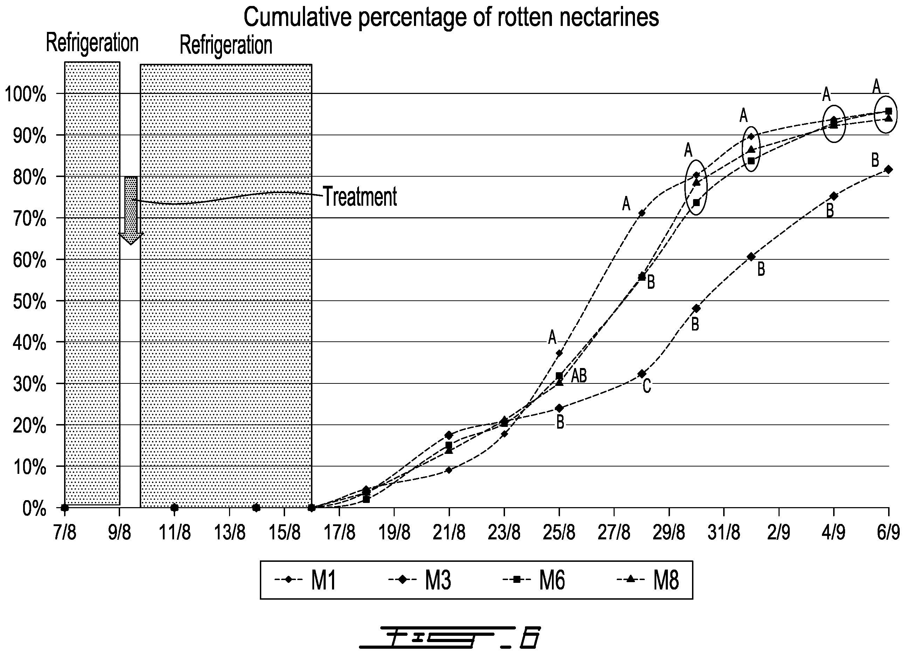

Figure 6 shows the results of the cumulative percentage of rotten nectarines treated with methods of treatment M1, M3, M6 and M8. The fruits were refrigerated at 2-4°C for 5 to 8 days after the post-harvest treatment and before the storage in the air-conditioned room at 20-22°C for 15 to 21 days. The step of refrigeration after the post-harvest treatment and before the storage in the air-conditioned room allowed a greater multiplication of the pathogenic fungi due to temperature surges and condensation. Spray treatment (M3) of C. *rosea* f. *catenulata* J1446 to harvested nectarines significantly reduced incidence and rate of development of rotted fruits.

On a regular basis during the study, the fungi associated with the infected fruits were isolated and identified.

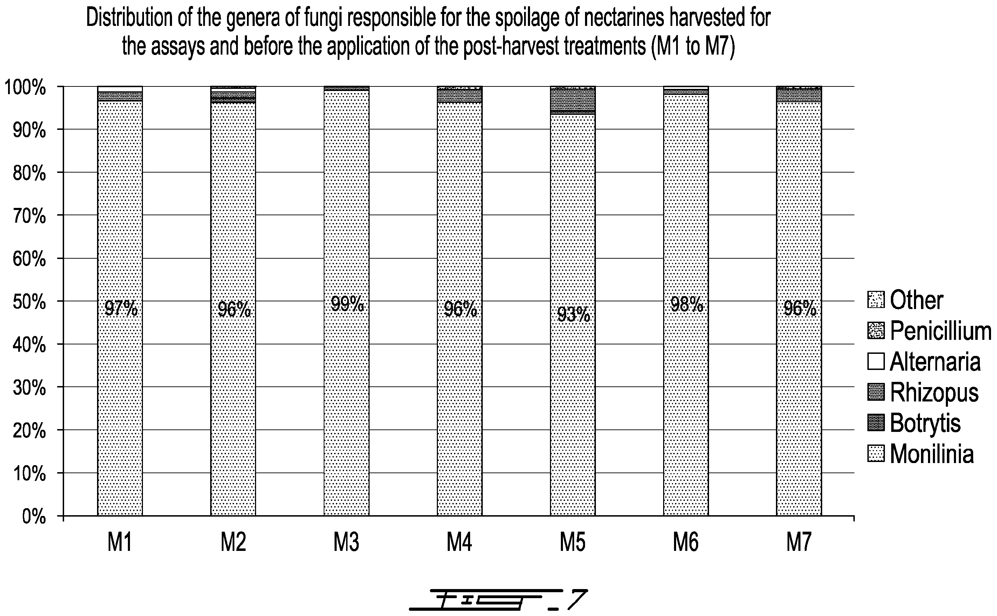

Results shown in Figure 7 demonstrated that, on the harvest day of the nectarines, the pathogenic fungi isolated from the fruits were *Monilinia* spp., *Rhizopus* spp., *Alternaria* spp., *Penicillium spp.* and *Botrytis* spp.. *Monilinia spp.* was found to be associated as the predominant fungus with the rotten fruits (before the post-harvest treatments were applied).

Based on these results, it has been demonstrated that C. *rosea* f. *catenulata* J1446 can reduce the incidence and rate of development of *Monilinia* spp. infection in harvested nectarines.

### EXAMPLE 3: BIOLOGICAL CONTROL OF POST-HARVEST FUNGAL ROTS OF PLUMS USING C. ROSEA F. CATENULATA

The aim of this study was to investigate the effect of various post-harvest treatment methods on the post-harvest quality of plums during storage conditions.

### Fruits:

Plums (Variety: TC SUN; Year of planting: 2008; Distance between plantings and density: 4 x 1 m) were picked at firm ripe stage, measured, selected (same size, same level of maturity, lack of damage) and boxed. *Monilinia* spp. was found to be associated as the predominant fungus with the rotten fruits.

### Post-harvest treatments:

The plums were disposed on trays (100 plums per tray). There were four replicates (trays) of 100 plums per method of treatment. Non-treated fruits (i.e. produced fruits via Integrated Fruit Production) were used as negative controls. The trays were stored at 0-0.5°C for 48 hours.

Six different methods of treatment were tested and compared. They are defined in Table 3.

**Table 3: Description of the tested methods of treatment**

| | Methods of treatment | Post-treatment storage condition |
|---|---|---|
| T1 | Untreated control | Air-conditioned room at 19°C for 15 to 30 days |
| T2 | Prestop WG^{®} (40 g/30 m³) - Post-harvest treatment via nebulizing system (or mist fogging system) 48 hours after harvest | |
| T3 | Prestop WG^{®} 0.2% - Post-harvest treatment via spraying 48 hours after harvest | |
| T4 | Untreated control | Refrigeration at 0-0.5 °C for 4 to 6 weeks followed by storage in air-conditioned room at 19°C for 15 to 30 days |
| T5 | Prestop WG^{®} (40 g/30 m³) - Post-harvest treatment via nebulizing system (or mist fogging system) 48 hours after harvest | |
| T6 | Prestop WG^{®} 0.2% - Post-harvest treatment via spraying 48 hours after harvest | |

For the post-harvest treatments, Prestop WG^{®} (Lallemand) which contains C. *rosea* f. *catenulata* J1446 was used.

A stock solution of Prestop WG^{®} was prepared using sterile distilled water with C. *rosea* f. *catenulata* J1446 and amounts of suspension were calculated to be applied at the equivalent of 2 g/l. The suspension was applied using a spray bottle pump. Eight sprays were applied onto one face of a tray for a total of 7.5 ml. For treatments T4 to T6, the suspension was applied using a nebulizer (Atomist 1037, Hyprodis). The fruits were air-dried.

Following the inoculation step, the plums treated with the treatments method T4 to T6 were submitted to a refrigerated storage at 0-0.5°C for 4 to 6 weeks before the transfer in an air-conditioned room at 19°C until the end of the study. The fruits treated with the treatments method T1 to T3 were directly stored in an air-conditioned room at 19°C until the end of the study.

Percent fruit infection along with the identification of the pathogens was measured every 48-72 hours for 5 to 30 days.

### Statistical analyses:

Data were statistically analyzed using StatBox Pro. Analysis of variance was performed on arcsin square-root transformed data by the general linear models procedure. Mean separations were performed using the Student Newmann and Keuls test.

### Results and conclusion:

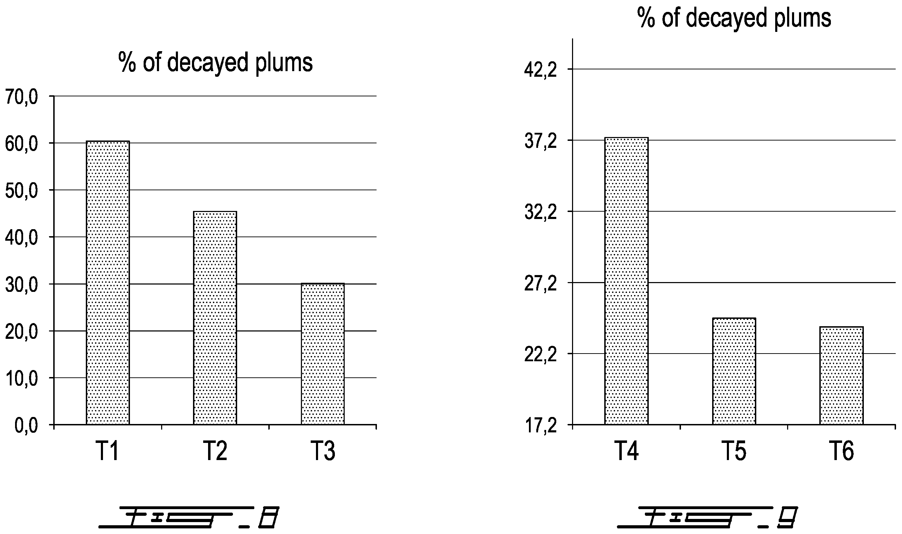

The results shown in Figures 8 and 9 clearly demonstrated that C. *rosea* f. *catenulata* J1446 protected the harvested plums against decay caused by pathogenic fungi as, for example, decay caused by *Monilinia* spp.

### EXAMPLE 4: EFFECT OF C. ROSEA F. CATENULATA STRAIN J1446 ON POST-HARVEST DECAY PATHOGENS PENICILLIUM DIGITATUM AND PENICILLIUM ITALICUM ON CITRUS FRUIT (Example not forming part of the present invention)

The objective of the study was to evaluate the effect of C. *rosea* f. *catenulata* strain J1446 on post-harvest decay pathogens P. *digitatum* and P. *italicum* on mandarins which are highly susceptible to *Penicillium* spp.

The test was carried out on healthy mandarins which were cleaned with water and left to dry. The fruits were injured with two perforations per mandarins.

The two fungic species tested were P. *digitatum* and P. *italicum,* and titration of the suspensions of spores of same was carried out using young 5-7 day cultures implanted in PDA medium (potato, dextrose and agar) and incubated at temperature of 24° C., by scraping of the colonies into sterile distilled water. A spore count was then carried out, setting the desired concentration, expressed in cfu/ml.

Batches of mandarins prepared as explained above were inoculated with the suspension of Prestop at a concentration of 1% and 2%. Six, 18 and 24 hours after the inoculation with C. *rosea* f. *catenulata* strain J1446 (Prestop), the fruits were inoculated with the titrated suspensions of pathogens of the two species selected, at concentrations of 10⁵ cfu/ml. In parallel to this the control test was set up, in which mandarins were inoculated only with the titrated suspension of the pathogen and sterile distilled water.

All the treated fruits were left to dry and placed in plastic bags to create high humidity. They were incubated at ambient temperature 20° C for 3-4 days. The incubation period was set on the basis of the time needed for the control mandarins to present large rotting diameters. Following said incubation period the results were read, by evaluating the decay incidence (in percentage), by measuring the diameters of rot of all the perforations made and by examining the presence/absence of sporulation.

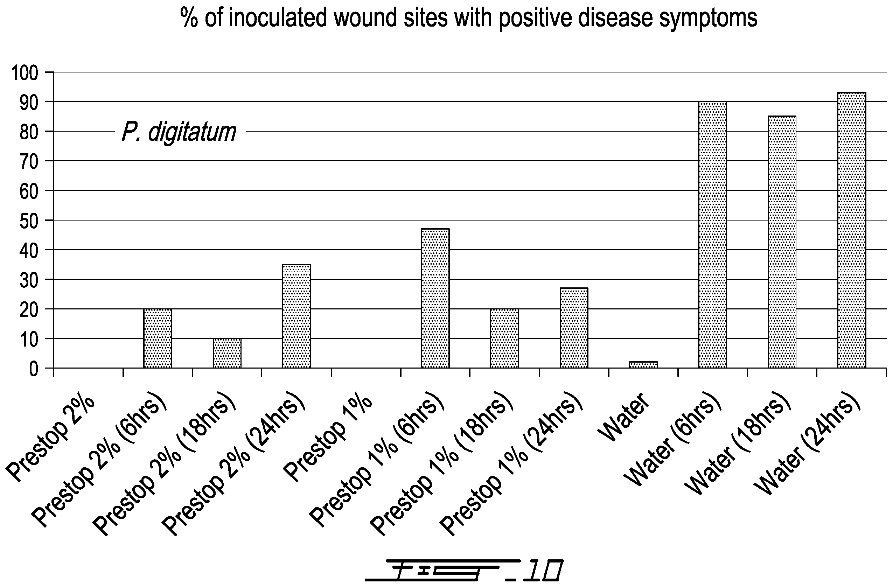

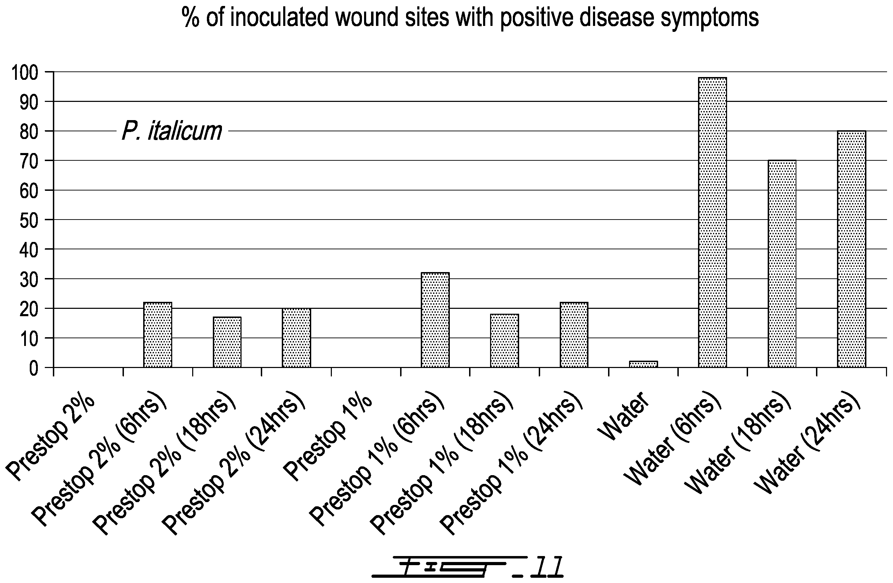

Figure 10 shows the results obtained in the case of biological control of P. *digitatum* and Figure 11 the results with P. *italicum.*

The results shown in Figures 10 and 11 demonstrated the high effectiveness of the antagonist C. *rosea* f. *catenulata* strain J1446 in control of the two species of pathogenic fungi tested and, consequently, in control of rotting of the fruits.

### REFERENCE

Wilson, C.L., Wisniewski, M., 1989. Biological control of postharvest diseases of fruits and vegetables: an emerging technology. Annu. Rev. Phytopathol. 27, 425-441.

## Claims

1. A post-harvest treatment method for protecting harvested produce against post-harvest decay caused by plant pathogen, for preventing or reducing post-harvest decay of harvested produce caused by plant pathogen or for controlling plant pathogen on harvested produce comprising applying to the harvested produce an isolated culture, fungal spore or formulation of *Clonostachys rosea* f. *catenulata* strain J1446 in an amount effective to protect the harvested produce against post-harvest decay caused by plant pathogen, to reduce post-harvest decay caused by plant pathogen or to extend post-harvest shelf-life of stored harvested produce relative to an untreated control, wherein the post-harvest decay of harvested produce is caused by *Monilinia* spp, wherein the harvested produce is a stone fruit or a citrus fruit and wherein said culture of C. *rosea* f. *catenulata* strain J1446 is applied to the harvested produce at a concentration of between about 10³ to 10¹² cfu/ml, about 10⁴ to 10¹¹ cfu/ml, about 10⁵ to 10¹⁰ cfu/ml or about 10⁶ to 10⁹ cfu/ml.

2. The post-harvest treatment method of claim 1, further comprising, after applying to the harvested produce the isolated culture, fungal spore or formulation of C. *rosea,* storing said harvested produce at a temperature of about 20°C.

3. The post-harvest treatment method of claim 1, further comprising, after applying to the harvested produce the isolated culture, fungal spore or formulation of C. *rosea,* storing said harvested produce at a temperature less than 5° C.

4. The post-harvest method of claim 3, further comprising, after storing said harvested produce at a temperature less than 5° C, storing said harvested produce at a temperature of about 20°C.

5. The post-harvest treatment method of claim 1, wherein the stone fruit is peaches, nectarines, plums, apricots or cherries.

6. The post-harvest treatment method of claim 1, wherein the citrus fruit is clementines, grapefruits, lemons, limes, mandarins, oranges or tangerines.

7. The post-harvest treatment method of any one of claims 1 to 6, wherein said culture, fungal spore or formulation of C. *rosea* is combined with an agriculturally acceptable carrier.

8. The post-harvest treatment method of any one of claims 1 to 7, wherein said culture of C. *rosea* is in a dry formulation and applied to the harvested produce at a concentration of between about 10³ to 10¹² cfu/g, about 10⁴ to 10¹¹ cfu/g, about 10⁵ to 10¹⁰ cfu/g or about 10⁶ to 10⁹ cfu/g.

9. Use of an isolated culture, fungal spore or formulation of C. *rosea* f. catenulata strain J1446 in an amount effective for protecting harvested produce against post-harvest decay caused by plant pathogen, for reducing post-harvest decay caused by plant pathogen or for extending the post-harvest shelf-life of stored harvested produce relative to an untreated control, wherein the post-harvest decay of harvested produce is caused by *Monilinia* spp, wherein the harvested produce is a stone fruit or a citrus fruit and wherein said culture of C. *rosea* f. *catenulata* strain J1446 is applied to the harvested produce at a concentration of between about 10³ to 10¹² cfu/ml, about 10⁴ to 10¹¹ cfu/ml, about 10⁵ to 10¹⁰ cfu/ml or about 10⁶ to 10⁹ cfu/ml.

10. The use of claim 9, wherein the stone fruit is peaches, nectarines, plums, apricots or cherries, and the citrus fruit is clementines, grapefruits, lemons, limes, mandarins, oranges or tangerines.

## Patentansprüche

1. Nacherntebehandlungsverfahren zum Schutz von Erntegut vor durch Pflanzenpathogene verursachter Nacherntefäule, zur Prävention oder Reduktion von durch Pflanzenpathogene verursachter Nacherntefäule bei Erntegut oder zur Bekämpfung von Pflanzenpathogenen bei Erntegut, umfassend das Auftragen einer isolierten Kultur, von Pilzsporen oder einer Zubereitung von *Clonostachys rosea f. catenulata* Stamm J1446 auf das Erntegut in einer im Sinne des Schutzes des Ernteguts vor durch Pflanzenpathogene verursachter Nacherntefäule wirksamen Menge, um die durch Pflanzenpathogene verursachte Nacherntefäule zu reduzieren oder die Nacherntehaltbarkeit von gelagertem Erntegut im Vergleich zu einer unbehandelten Kontrolle zu verlängern, wobei die Nacherntefäule des Ernteguts durch *Monilinia* spp. verursacht wird, wobei das Erntegut eine Steinfrucht oder eine Zitrusfrucht ist und wobei die Kultur von *C. rosea f. catenulata* Stamm J1446 in einer Konzentration von etwa 10³ bis 10¹² KBE/ml, etwa 10⁴ bis 10¹¹ KBE/ml, etwa 10⁵ bis 10¹⁰ KBE/ml oder etwa 10⁶ bis 10⁹ KBE/ml auf das Erntegut aufgetragen wird.

2. Nacherntebehandlungsverfahren gemäß Anspruch 1, weiterhin umfassend, nach dem Auftragen der isolierten Kultur, der Pilzsporen oder der Zubereitung von C. *rosea* auf das Erntegut, das Lagern des Ernteguts bei einer Temperatur von etwa 20°C.

3. Nacherntebehandlungsverfahren gemäß Anspruch 1, weiterhin umfassend, nach dem Auftragen der isolierten Kultur, der Pilzsporen oder der Zubereitung von C. *rosea* auf das Erntegut, das Lagern des Ernteguts bei einer Temperatur von weniger als 5°C.

4. Nachernteverfahren gemäß Anspruch 3, weiterhin umfassend, nach dem Lagern des Ernteguts bei einer Temperatur von weniger als 5°C, das Lagern des Ernteguts bei einer Temperatur von etwa 20°C.

5. Nacherntebehandlungsverfahren gemäß Anspruch 1, wobei es sich bei der Steinfrucht um Pfirsiche, Nektarinen, Pflaumen, Aprikosen oder Kirschen handelt.

6. Nacherntebehandlungsverfahren gemäß Anspruch 1, wobei es sich bei der Zitrusfrucht um Clementinen, Grapefruits, Zitronen, Limetten, Mandarinen, Orangen oder Tangerinen handelt.

7. Nacherntebehandlungsverfahren gemäß einem der Ansprüche 1 bis 6, wobei die Kultur, die Pilzsporen oder die Zubereitung von C. *rosea* mit einem landwirtschaftlich akzeptablen Träger kombiniert wird.

8. Nacherntebehandlungsverfahren gemäß einem der Ansprüche 1 bis 7, wobei die Kultur von C. *rosea* als Trockenzubereitung vorliegt und in einer Konzentration von etwa 10³ bis 10¹² KBE/g, etwa 10⁴ bis 10¹¹ KBE/g, etwa 10⁵ bis 10¹⁰ KBE/g oder etwa 10⁶ bis 10⁹ KBE/g auf das Erntegut aufgetragen wird.

9. Verwendung einer isolierten Kultur, von Pilzsporen oder einer Zubereitung von C. *rosea f. catenulata* Stamm J1446 in einer im Sinne des Schutzes des Ernteguts vor durch Pflanzenpathogene verursachter Nacherntefäule wirksamen Menge zum Reduzieren der durch Pflanzenpathogene verursachten Nacherntefäule oder zum Verlängern der Nacherntehaltbarkeit von gelagertem Erntegut im Vergleich zu einer unbehandelten Kontrolle, wobei die Nacherntefäule des Ernteguts durch *Monilinia* spp. verursacht wird, wobei das Erntegut eine Steinfrucht oder eine Zitrusfrucht ist und wobei die Kultur von C. *rosea f. catenulata* Stamm J1446 in einer Konzentration von etwa 10³ bis 10¹² KBE/ml, etwa 10⁴ bis 10¹¹ KBE/ml, etwa 10⁵ bis 10¹⁰ KBE/ml oder etwa 10⁶ bis 10⁹ KBE/ml auf das Erntegut aufgetragen wird.

10. Verwendung gemäß Anspruch 9, wobei es sich bei der Steinfrucht um Pfirsiche, Nektarinen, Pflaumen, Aprikosen oder Kirschen handelt und es sich bei der Zitrusfrucht um Clementinen, Grapefruits, Zitronen, Limetten, Mandarinen, Orangen oder Tangerinen handelt.

## Revendications

1. Procédé de traitement post-récolte pour protéger des produits récoltés contre la pourriture post-récolte causée par un pathogène végétal, pour prévenir ou réduire la pourriture post-récolte de produits récoltés causée par un pathogène végétal, ou pour contrôler un pathogène végétal sur des produits récoltés, comprenant l'application sur lesdits produits récoltés d'une culture isolée, de spores fongiques ou d'une formulation de la souche J1446 de *Clonostachys rosea* f. *catenulata* en une quantité efficace pour protéger les produits récoltés contre la pourriture post-récolte causée par un pathogène végétal, pour réduire la pourriture post-récolte causée par un pathogène végétal ou pour prolonger la durée de conservation post-récolte des produits récoltés stockés par rapport à un témoin non traité, dans lequel la pourriture post-récolte des produits récoltés est causée par *Monilinia* spp., dans lequel les produits récoltés sont des fruits à noyau ou des agrumes, et dans lequel ladite culture de C. *rosea* f. *catenulata* souche J1446 est appliquée sur les produits récoltés à une concentration comprise entre environ 10³ et 10¹² ufc/ml, environ 10⁴ et 10¹¹ ufc/ml, environ 10⁵ et 10¹⁰ ufc/ml ou environ 10⁶ et 10⁹ ufc/ml.

2. Procédé de traitement post-récolte selon la revendication 1, comprenant en outre, après application sur les produits récoltés de la culture isolée, des spores fongiques ou de la formulation de C. *rosea,* le stockage desdits produits récoltés à une température d'environ 20 °C.

3. Procédé de traitement post-récolte selon la revendication 1, comprenant en outre, après application sur les produits récoltés de la culture isolée, des spores fongiques ou de la formulation de C. *rosea,* le stockage desdits produits récoltés à une température inférieure à 5 °C.

4. Procédé post-récolte selon la revendication 3, comprenant en outre, après le stockage desdits produits récoltés à une température inférieure à 5 °C, le stockage desdits produits récoltés à une température d'environ 20 °C.

5. Procédé de traitement post-récolte selon la revendication 1, dans lequel les fruits à noyau sont des pêches, des nectarines, des prunes, des abricots ou des cerises.

6. Procédé de traitement post-récolte selon la revendication 1, dans lequel les agrumes sont des clémentines, des pamplemousses, des citrons, des citrons verts, des mandarines, des oranges ou des tangerines.

7. Procédé de traitement post-récolte selon l'une quelconque des revendications 1 à 6, dans lequel ladite culture, lesdites spores fongiques ou ladite formulation de C. *rosea* sont combinées avec un excipient agricolement acceptable.

8. Procédé de traitement post-récolte selon l'une quelconque des revendications 1 à 7, dans lequel ladite culture de *C. rosea* se présente sous une formulation sèche et est appliquée sur les produits récoltés à une concentration comprise entre environ 10³ et 10¹² ufc/g, environ 10⁴ et 10¹¹ ufc/g, environ 10⁵ et 10¹⁰ ufc/g ou environ 10⁶ et 10⁹ ufc/g.

9. Utilisation d'une culture isolée, de spores fongiques ou d'une formulation de C. *rosea* f. *catenulata* souche J1446 en une quantité efficace pour protéger des produits récoltés contre la pourriture post-récolte causée par un pathogène végétal, pour réduire la pourriture post-récolte causée par un pathogène végétal ou pour prolonger la durée de conservation post-récolte des produits récoltés stockés par rapport à un témoin non traité, dans laquelle la pourriture post-récolte des produits récoltés est causée par *Monilinia* spp., dans laquelle les produits récoltés sont des fruits à noyau ou des agrumes, et dans laquelle ladite culture de C. *rosea* f. *catenulata* souche J1446 est appliquée sur les produits récoltés à une concentration comprise entre environ 10³ et 10¹² ufc/ml, environ 10⁴ et 10¹¹ ufc/ml, environ 10⁵ et 10¹⁰ ufc/ml ou environ 10⁶ et 10⁹ ufc/ml.

10. Utilisation selon la revendication 9, dans laquelle les fruits à noyau sont des pêches, des nectarines, des prunes, des abricots ou des cerises, et les agrumes sont des clémentines, des pamplemousses, des citrons, des citrons verts, des mandarines, des oranges ou des tangerines.
